# EUROPÄISCHE PATENTSCHRIFT

(11) **EP 0 837 017 B1**
(45) Veröffentlichungstag und Bekanntmachung des Hinweises auf die Patenterteilung: **28.11.2001**
(21) Anmeldenummer: 97810748.0
(22) Anmeldetag: 07.10.1997
(51) Int. Cl.: B65G 51/03

(54) **Förderanlage zur Förderung von Hohlkörpern**
Conveyor-device for conveying hollow articles
Dispositif de transport pour le transport de corps creux

(30) Priorität: 18.10.1996 CH 254996
(43) Veröffentlichungstag der Anmeldung: 22.04.1998
(73) Patentinhaber: VT Zurich Marketing Pte. Ltd., Singapore 1232 (SG)
(72) Erfinder: Egger, Walter C., 6353 Weggis (CH)
(74) Vertreter: Rottmann, Maximilian R.

(56) Entgegenhaltungen:
- EP-A- 0 645 323
- GB-A- 2 025 884
- US-A- 5 129 504
- US-A- 5 299 889

## Beschreibung

Die vorliegende Erfindung betrifft eine Förderanlage zur Förderung von Hohlkörpern nach dem Oberbegriff des Anspruchs 1.

Förderanlagen zur Förderung von einseitig offenen Hohlkörpern, wie beispielsweise Kunststoffflaschen, sind in verschiedenen Ausführungen bekannt. Der Einfachheit halber wird nachfolgend jeweils nur noch von Flaschen anstelle von einseitig offenen Hohlkörpern gesprochen. Die Aufgabe von solchen Förderanlagen kann beispielsweise darin bestehen, die Flaschen von einem Ausgangsort, beispielsweise einem Zwischen- oder Eingangslager, zu einer Verarbeitungsvorrichtung, beispielsweise einer Abfüllanlage, zu transportieren und letzterer in einer vorbestimmten Lage zu übergeben. Zwischen dem Ausgangsort und der Verarbeitungsvorrichtung werden die Flaschen im allgemeinen einer Reinigung unterzogen, indem diese an einer Flaschenreinigungsmaschine vorbeigeführt werden, welche in Fachkreisen unter dem Begriff Rinser bekannt ist. Zudem kommt es häufig vor, dass die Hohlkörper zwischen Eingang und Abfüllanlage zur Überwindung von Höhenunterschieden mittels Stockwerkförderanlagen befördert werden.

Der vermehrte Einsatz von leichten, rezyklierbaren Kunststoffflaschen, beispielsweise PET-Flaschen, stellt neue Anforderungen an die bekannten Förderanlagen. Dies rührt in erster daher, dass solche Flaschen eine nur sehr geringe Eigenstabilität sowie eine, zumindest im leeren Zustand, ungenügende Standfestigkeit aufweisen.

Als Hauptförderer werden häufig Schleppkettenförderer verwendet, welche mit zwei in seitlichem Abstand voneinander gleichsinnig laufenden Förderketten ausgerüstet sind, an denen gegeneinander gerichtete, einen Förderkanal begrenzende Mitnehmer mit elastischen Greifern angebracht sind. Als einlaufseitige Anschlussförderer kommen in der Regel Förderbänder zum Einsatz, auf welchen die Flaschen stehend befördert werden. Zur seitlichen Führung der Flaschen sind entlang der Förderbänder üblicherweise Führungsgeländer angebracht.

Normalerweise weist die Förderbahn des Hauptförderers in den genannten Anwendungsfällen nebst geradlinigen auch vertikal gekrümmte Bahnabschnitte auf. Beim Durchgang der Flaschen durch vertikal gekrümmte Bahnabschnitte verlaufen die Längsachsen der aufeinanderfolgenden Flaschen radial zueinander, weshalb es notwendig ist, einen gewissen gegenseitigen Abstand der Flaschen einzuhalten. Im Falle eines Schleppkettenförderers ist dieser Abstand jedoch nur bedingt regelmässig. Um einen wenigstens annähernd regelmässigen Abstand der Flaschen zu erreichen, ist es üblich, die Flaschen im einlaufseitigen Anschlussförderer ohne Lücken dicht an dicht zu fördern, wobei die Fördergeschwindigkeit des Hauptförderers gegenüber derjenigen des Anschlussförderers soweit erhöht wird, dass sich der gewünschte Flaschenabstand einstellt. Im auslaufseitigen Anschlussförderer können die Flaschen bei entsprechend verminderter Fördergeschwindigkeit wiederum relativ dicht aneinander stehen.

Da ein solcher Schleppkettenförderer, oder ein gleichartig arbeitender Hauptförderer, die zu fördernden Flaschen jeweils nur seitlich erfasst, ist die Lage, welche die Flaschen im Förderbereich des Hauptförderers einnehmen und in der sie diesen verlassen, einzig bestimmt durch die Lage, in der die Flaschen dem Hauptförderer vom einlaufseitigen Anschlussförderer übergeben werden. Auf dem Transportband, auf welchem die Hohlkörper dem Anschlussförderer zugeführt werden, werden die Flaschen in aufrechter Stellung befördert. Im Übergabebereich zum nachfolgenden Hauptförderer findet infolge der höheren Fördergeschwindigkeit des letzteren eine Vereinzelung der Flaschen statt, d.h. eine vom Hauptförderer erfasste Flasche wird von der jeweils nachfolgenden Flasche getrennt. Durch diese Trennung verliert die nunmehr vorderste Flasche im Verband der dicht an dicht auf dem Transportband stehenden Flaschen den vorderseitigen Halt, der sonst meist ausreicht, um eine ins Schwanken geratene Flasche am Kippen gegen die entfernte Flasche hin zu hindern. Es ist jedoch wichtig, dass die Flaschen in dieser Übergabephase ihre aufrechte Stellung jeweils beibehalten, bis sie vom Hauptförderer erfasst werden, damit die Flaschen den Hauptförderer in der gleichen räumlichen Orientierung wieder verlassen und in aufrechter Stellung vom Transportband des auslaufseitigen Anschlussförderers übernommen werden können.

Da insbesondere Kunststoffflaschen nur über eine geringe Standfestigkeit verfügen, wurde in der EP 0 645 323 vorgeschlagen, in den Übergabebereichen vom einlaufseitigen Anschlussförderer zum Hauptförderer und vom Hauptförderer zum auslaufseitigen Anschlussförderer Hilfseinrichtungen anzuordnen, welche die räumliche Orientierung der Hohlkörper für deren Eingabe in den jeweils nachfolgenden Förderer eindeutig festlegen. Dadurch wird erreicht, dass auch Hohlkörper mit geringer Standfestigkeit sicher gefördert und vom einlaufseitigen Anschlussförderer zum Hauptförderer bzw. vom Hauptförderer zum auslaufseitigen Anschlussförderer übergeben werden können, ohne dass aufwendige Formatteile eingesetzt werden müssen.

Obwohl sich derartige Hilfseinrichtungen bewährt haben, hat sich zwischenzeitlich in der Praxis ein weiteres Problem ergeben, indem nämlich ein hoher Prozentsatz, bis zu ca. 5%, der beim Hauptförderer ankommenden Flaschen deformiert -eingebeult- ist und/oder dass die angelieferten Flaschen eine ungenügende Masshaltigkeit aufweisen. Dies führt in beiden Fällen dazu, dass die Flaschen sehr schwierig in der Handhabung sind und oft nicht in der gewünschten Lage vom einen an den anderen Förderer übergeben werden können. Es kann beispielsweise vorkommen, dass die angelieferten Flaschen auf bis zu einem Drittel ihres Durchmessers deformiert sind. Solche Flaschen können, je nach deren Ausrichtung bzw. Lage der Einbeulung in Bezug auf die Greiferelemente des Förderers, während dem Transport verrutschen, woraus sich Probleme bei der Flaschen-Übergabe vom einen zum anderen Förderer ergeben. Sehr oft können solche Probleme zu einem Stillstand der gesamten Förderanlage führen.

Der Erfindung liegt deshalb die Aufgabe zugrunde, eine Förderanlage der eingangs genannten Art derart weiterzubilden, dass auch deformiert zugeführte oder nicht genau masshaltige Hohlkörper sicher ausgerichtet und gefördert werden können.

Zur Lösung dieser Aufgabe werden die im Kennzeichen des Anspruchs 1 angeführten Merkmale vorgeschlagen, wobei die Merkmale sowohl einzeln wie auch in Kombination zur Anwendung kommen können.

Durch das Vorsehen einer Luftschleuse, in welcher die Hohlkörper mittels bewegter Luft für deren Eingabe in den nachfolgenden Förderer ausgerichtet werden, können die Flaschen berührungslos und unabhängig von mechanischen Hilfsmitteln in die gewünschte Lage gebracht werden. Dabei ist es, im Gegensatz zu den meisten anderen Systemen, unerheblich, ob die Flaschen deformiert oder nicht genau masshaltig sind. Insbesondere spielt es auch keine Rolle, wenn die jeweils vorderste Flasche im Übergabebereich vom Hauptförderer erfasst und von der jeweils nachfolgenden Flasche getrennt wird, da die unmittelbar nachfolgende Flasche durch den Luftstrom in aufrechter Position gehalten wird.

Mit dem Vorsehen einer Luftschleuse in der auslaufseitigen Übergabeeinrichtung kann in diesem Bereich ebenfalls eine einwandfreie Ausrichtung der Flaschen erreicht werden, damit diese in räumlich eindeutig definierter Lage an den nachfolgenden Förderer übergeben werden kann. Auch in diesem Fall können die Flaschen, unabhängig davon ob sie allenfalls eingedrückt oder nicht genau masshaltig sind, zuverlässig ausgerichtet werden.

Durch das Vorsehen einer pneumatischen Vorrichtung, welche in der einlaufseitigen Übergabeeinrichtung angeordnet ist, können die Hohlkörper unter Überdruck gesetzt werden. Dies bewirkt, dass ein Grossteil der deformierten Hohlkörper in den Normzustand versetzt werden kann, indem durch den herrschenden Überdruck allfällige Deformationen -Einbeulungen- behoben werden.

Es versteht sich, dass die vorgängig angeführten Merkmale je nach Anforderung in beliebiger Kombination zur Anwendung kommen können.

Wenn sowohl eine pneumatische Vorrichtung wie auch eine oder zwei Luftschleusen vorgesehen werden, so wird das Problem gleich von zwei Seiten angepackt:
- Durch die pneumatische Vorrichtung wird ein Grossteil der verbeulten Flaschen wieder in den Grundzustand versetzt;
- Diejenigen Flaschen, deren Einbeulungen von der pneumatischen Vorrichtung nicht behoben werden können, werden durch die nachfolgende(n) Luftschleuse(n) trotzdem sicher ausgerichtet.

Bevorzugte Ausführungsformen der Förderanlage sind in den abhängigen Ansprüchen 2 bis 9 definiert.

So ist bei einer bevorzugten Ausführungsform der Förderanlage vorgesehen, die im auslaufseitigen Übergabebereich angeordnete Luftschleuse als Stauzone für die Hohlkörper auszubilden, in welcher die im Hauptförderer beabstandeten Hohlkörper wieder zusammengeführt werden. Diese, als Luftschleuse ausgebildete Stauzone weist in einer bevorzugten Ausführungsform eine Länge von mehreren Metern auf, in welcher die Flaschen in Förderrichtung elastisch deformierbar sind, wodurch allfällige, über einen gewissen Zeitraum zwischen dem Haupt- und dem Anschlussförderer auftretende Förderdifferenzen ausgleichbar bzw. aufnehmbar sind.

Eine solche Luftschleuse kann zudem, wie vorgeschlagen, Mittel zum Erfassen oder Messen einer allfälligen, quer zur Förderrichtung bewirkten Deformation der Hohlkörper aufweisen, so dass aufgrund der erfassten oder gemessenen Deformation die Geschwindigkeit des Haupt- und/oder des einlaufseitigen- und/oder des auslaufseitigen Anschlussförderers derart beeinflusst werden kann, dass die Förderraten zwischen den einzelnen Förderern zumindest annähernd gleich sind. Dadurch kann der im Normalfall zwischen dem auslaufseitigen Anschlussförderer und der Abfüllanlage benötigte Luftförderer, der als Zwischenpuffer und Zwischenförderer dient und allfällige Förderunterschiede aufnimmt bzw. Schwankungen ausgleicht, gänzlich weggelassen werden.

Nachfolgend wird ein Ausführungsbeispiel der Erfindung anhand von Zeichnungen näher erläutert. In den Zeichnungen zeigt:
Fig. 1. eine schematische Seitenansicht der einlaufseitigen Übergabeeinrichtung;
Fig. 2. eine schematische Draufsicht auf die in Fig. 1 dargestellte Übergabeeinrichtung;
Fig. 3 eine perspektivische Seitenansicht der einlaufseitigen Übergabeeinrichtung;
Fig. 4. eine schematische Seitenansicht der auslaufseitigen Übergabeeinrichtung;
Fig. 5 eine schematische Draufsicht auf die in Fig. 4 dargestellte, auslaufseitigen Übergabeeinrichtung, und
Fig. 6 eine perspektivische Seitenansicht der auslaufseitigen Übergabeeinrichtung.

Da das Grundprinzip gattungsgemässer Förderanlagen zur Förderung von einseitig offenen Hohlkörpern bekannt ist, wird nachfolgend nur auf die im Zusammenhang mit der Erfindung wesentlichen Bestandteile eingegangen. Zudem wird der Einfachheit halber anstelle von einseitig offenen Hohlkörpern jeweils nur von Flaschen gesprochen.

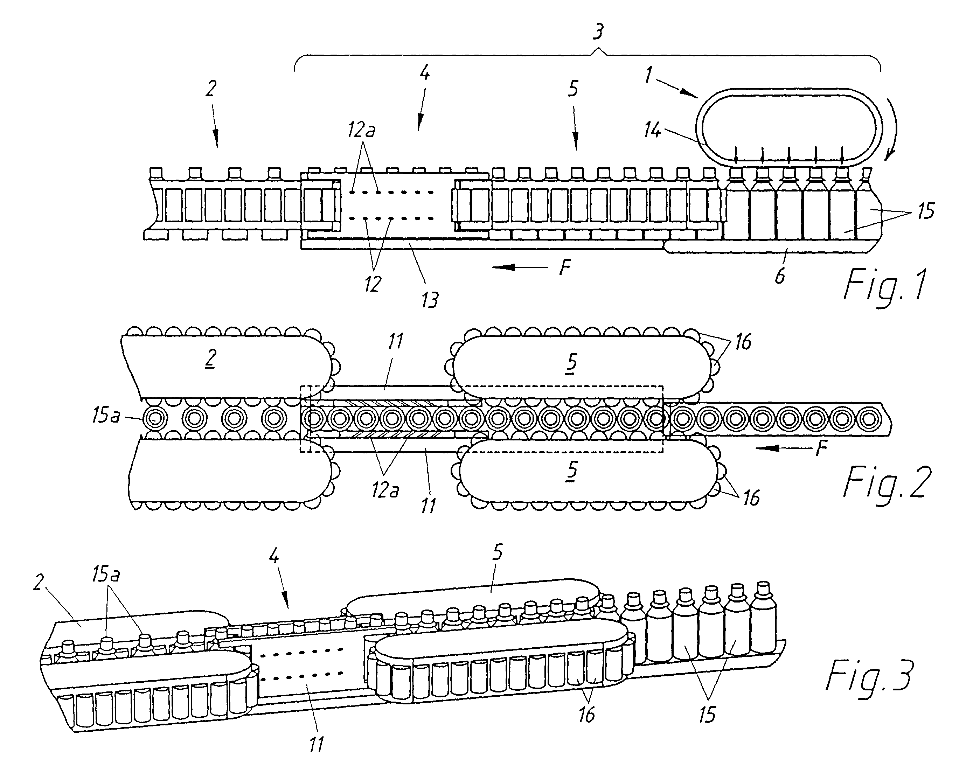

Die Fig. 1 bis 3 zeigen schematisch die einlaufseitige Übergabeeinrichtung. Diese besteht im wesentlichen aus einer pneumatischen Aufblas-Vorrichtung 1, einem als Seitenbandförderer ausgebildeten Zwischenförderer 5 sowie einer Luftschleuse 4. Der Hauptförderer ist nur ansatzweise eingezeichnet und mit dem Bezugszeichen 2 versehen, währenddem die zu fördernden Flaschen mit 15 bezeichnet sind. Die einlaufseitige Zufuhr der Flaschen 15 erfolgt über ein Förderband 6.

Die auf dem Förderband 6 ankommenden Flaschen 15 werden mittels der pneumatischen Aufblas-Vorrichtung 1 unter Überdruck gesetzt, wodurch allfällige Einbeulungen grösstenteils behoben werden können. Die ankommenden Flaschen 15 werden vom Seitenbandförderer 2 formschlüssig erfasst und von dessen umlaufenden Mitnehmern 16 kraftschlüssig mitgenommen.

Die pneumatische Aufblas-Vorrichtung 1 weist ein endlos umlaufendes Band 14 auf, dessen Geschwindigkeit elektronisch mit der Fördergeschwindigkeit der Flaschen 15 synchronisiert wird. Der Austritt der Druckluft kann über im umlaufenden Band 14 eingelassene Öffnungen erfolgen. Um allfällige Höhenunterschiede zwischen den einzelnen Flaschen 15 ausgleichen zu können, ist das umlaufende Band 14 vorzugsweise vertikal federnd aufgehängt und/oder komprimierbar ausgebildet.

Anstelle eines umlaufenden Bandes 14 können auch andere Mittel vorgesehen werden. Beispielsweise könnten federelastische Schläuche vorgesehen werden, die am austrittsseitigen Ende mit einer Mitnehmerplatte versehen sind, welch letztere durch die Flaschenhälse über einen bestimmten Weg mechanisch mitgenommen und auf diese Weise mit den Flaschenöffnungen synchronisiert werden. Denkbar sind jedoch auch elektronisch nachgeführte Mittel.

Am Ausgang des Seitenbandförderers 2 ist die Luftschleuse 3 angeordnet, in welcher die Flaschen 15 mittels eines pneumatischen Gegenstromes ausgerichtet und aufgereiht werden. Die Luftschleuse 4 weist dazu zwei Seitenwände 11 auf, auf deren Innenseiten eine Vielzahl von einzelnen 12, 12a Düsen angeordnet sind. Um die Flaschen 15 auf einer möglichst grossen Fläche pneumatisch anzustrahlen, sind pro Seitenwand 11 je zwei vertikal versetzte Düsenreihen 12; 12a vorgesehen, wobei der Austrittswinkel der Düsen 12, 12a den Anforderungen entsprechend wählbar ist. Zur vertikalen Abstützung der Flaschen 15 innerhalb der Luftschleuse 4 weist letztere eine Bodenplatte 13 auf. Dadurch, dass die Flaschen 15 innerhalb der Luftschleuse 4 durch keinerlei mechanische Hilfsmittel seitlich erfasst werden, können sich diese auf dieser Bodenplatte 13 auch in der Höhe exzellent ausrichten. Die notwendigen, pneumatischen Zuführleitungen sind zugunsten einer übersichtlichen Darstellung nicht eingezeichnet.

Im nachfolgenden Hauptförderer 2 werden die in der Luftschleuse 4 dicht an dicht stehenden Flaschen vereinzelt. Dies erfolgt, indem die Geschwindigkeit des Hauptförderers 2 grundsätzlich höher gewählt wird als die des Seitenbandförderers 5.

Der Vorteil einer derartigen Luftschleuse 4 anstelle von mechanischen Mitteln ist insbesondere darin zu sehen, dass auch eingedrückte oder nicht masshaltige Flaschen sicher ausgerichtet werden können. Ein weiterer Vorteil besteht darin, dass eine derartige Luftschleuse 4 praktisch unabhängig von der Flaschenform sicher und zuverlässig funktioniert, da keine flaschenspezifischen Formatteile notwendig sind. Dadurch könnten sogar unterschiedlich ausgebildete Flaschen zugeführt und in der Luftschleuse 4 sicher ausgerichtet werden.

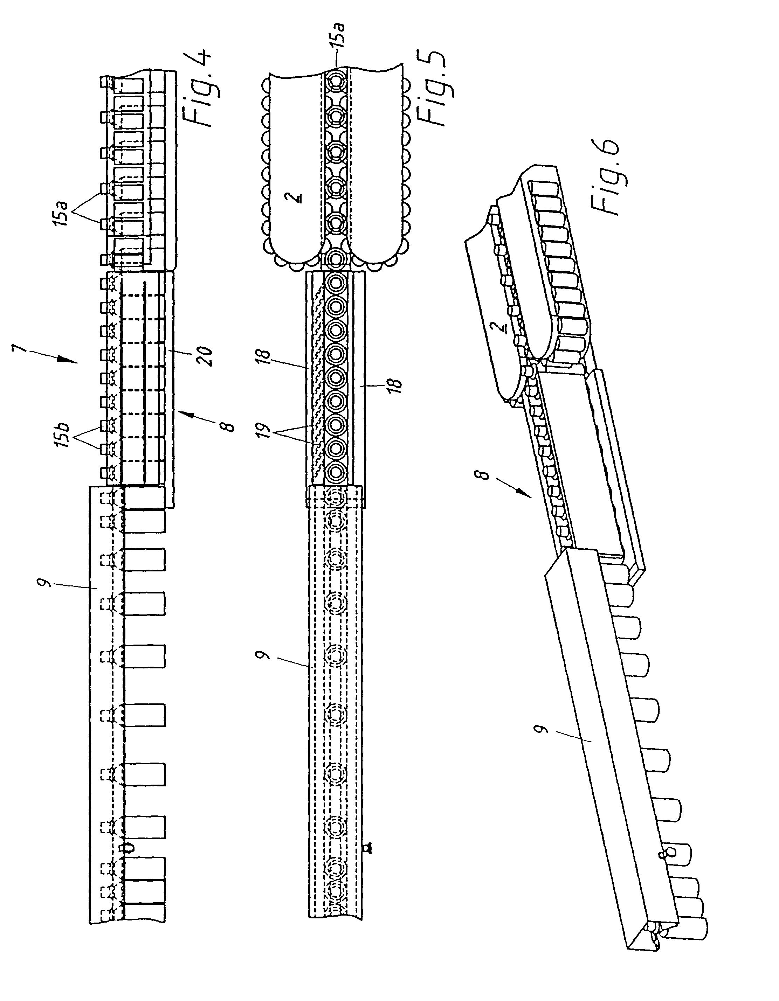

Die auslasseitige Übergabeeinrichtung 7 ist in der Fig. 4 in einer schematischen Seitenansicht, in der Fig. 5 in einer schematischen Draufsicht und in der Fig. 6 in einer perspektivischen Seitenansicht dargestellt.

Die auslaufseitige Übergabeeinrichtung 7 besteht im vorliegenden Fall hauptsächlich aus einer Luftschleuse 8, welche sich an den Hauptförderer 2 anschliesst.

Die Luftschleuse 8 weist wiederum zwei Seitenwände 18 und einen Boden 20 auf, wobei nur in der einen Seitenwand 18 Ausströmdüsen 19 vorgesehen sind. Die Luftschleuse 8 dient dem Ausrichten und Aufreihen der im Hauptförderer 2 beabstandeten Flaschen 15a, so dass diese an den nachfolgenden Anschlussförderer 9 übergeben werden können.

Als Anschlussförderer 9 ist ein pneumatischer Förderer vorgesehen, der die Flaschen 15b an deren Kragen abstützt und in bekannter Weise pneumatisch fördert. Am Ende dieses Anschlussförderers 9 folgt im Normalfall die Abfüllanlage, welche aus Gründen einer übersichtlichen Darstellung jedoch nicht eingezeichnet ist.

Nebst dem Transport der Flaschen 15b vom Hauptförderer 2 zur Abfüllanlage hat der pneumatische Anschlussförderer noch eine weitere Aufgabe, nämlich eine Ausgleichszone zu schaffen, in der allfällig auftretende Förderdifferenzen zwischen dem Hauptförderer 2 und der Abfüllanlage aufgenommen werden können. Um diese Förderdifferenzen zu beheben, werden die davor liegenden Zwangsförderer, nämlich der einlaufseitige Zwischenförderer 5 sowie der Hauptförderer 2 synchron in der Geschwindigkeit korrigiert.

Anstelle eines separaten, pneumatischen Anschlussförderers 9 kann auch die Luftschleuse 8 als Anschluss- bzw. Zwischenförderer ausgebildet sein und als Puffer wirken. Dazu muss die Luftschleuse 8 eine gewisse Mindestlänge, beispielsweise 5 Meter, aufweisen. Wenn die sich in der Luftschleuse 8 befindlichen Flaschen 15b auf einer Länge von 5 Metern in Förderrichtung elastisch deformiert werden, beispielsweise um je 10%, so genügt dies, um allfällige Förderdifferenzen zwischen dem Haupt- und dem auslaufseitigen Zwischenförderer 2, 5 über eine gewisse Zeit aufnehmen zu können, und zwar solange, bis sich die beim Erkennen von Förderdifferenzen vorzunehmenden Regeleingriffe auswirken. Beim Auftreten von Förderdifferenzen werden im Normalfall wiederum die in Förderrichtung davor liegenden Zwangsförderer, nämlich der einlaufseitige Zwischenförderer 5 sowie der Hauptförderer 2, synchron in der Geschwindigkeit korrigiert. Wenn die Luftschleuse 8 selber als Zwischenförderer ausgebildet ist, so braucht im Normalfall kein Anschlussförderer im herkömmlichen Sinne vorgesehen zu werden, sondern die Flaschen 15b können von der Luftschleuse 8 direkt an die nachfolgende Arbeitsstation -Abfüllanlage- übergeben werden. Je nach Bedarf - beispielsweise zum Überbrücken von grösseren Distanzen- kann es jedoch trotzdem sinnvoll sein, einen Anschlussförderer zwischenzuschalten.

Wenn die Luftschleuse 8 als Anschluss- bzw. Zwischenförderer wirken soll, so werden Mittel zum Erfassen der allfälligen Förderdifferenzen vorgesehen. Diese Mittel sollen eine quer zur Förderrichtung bewirkte Deformation der Hohlkörper erkennen. Eine solche Erfassung erfolgt vorzugsweise optisch. Aufgrund der erfassten Deformation kann die Geschwindigkeit des Haupt- und/oder des einlaufseitigen- und/oder des auslaufseitigen Anschlussförderers beeinflusst werden.

## Patentansprüche

1. Förderanlage zur Förderung von einseitig offenen Hohlkörpern, insbesondere von Kunststoffflaschen (15, 15a, 15b), mit einem Hauptförderer (2) für die stetige Förderung einer Folge von gegenseitig beabstandeten Hohlkörpern (15a), sowie mit dem Hauptförderer (2) ein- und auslaufseitig zugeordneten Übergabeeinrichtungen (3, 7) für die Übergabe von einem einlaufseitigen Anschlussförderer (6) zum Hauptförderer (2) und vom Hauptförderer (2) zu einem auslaufseitigen Anschlussförderer (9), **dadurch gekennzeichnet, dass** die einlaufseitige Übergabeeinrichtung (3) eine Luftschleuse (4) aufweist, in welcher die Hohlkörper (15) mittels bewegter Luft für deren Eingabe in den nachfolgenden Hauptförderer (2) ausgerichtet werden und/oder dass die auslaufseitige Übergabeeinrichtung (7) eine Luftschleuse (8) aufweist, in welcher die Hohlkörper (15b) mittels bewegter Luft für deren Eingabe in den nachfolgenden Förderer (9) ausgerichtet werden.

2. Förderanlage nach Anspruch 1, **dadurch gekennzeichnet, dass** die einlaufseitige Übergabeeinrichtung (3) eine pneumatische Vorrichtung (1) aufweist, mittels welcher die Hohlkörper (15) unter Überdruck gesetzt werden.

3. Förderanlage nach Anspruch 1, wobei die einlaufseitige Übergabeeinrichtung (3) eine Luftschleuse (4) aufweist, **dadurch gekennzeichnet, dass** letztere unmittelbar vor dem Hauptförderer (2) angeordnet und mit einer Mehrzahl von horizontal und vertikal beabstandeten Luftdüsen (12, 12a) versehen ist, über die die bewegte Luft entgegen der Förderrichtung (F) der Hohlkörper (15) austreten und letzteren einen Widerstand entgegensetzen kann.

4. Förderanlage nach Anspruch 3, **dadurch gekennzeichnet, dass** der Boden (13) der Luftschleuse (4) als vertikale Abstützung und Führung der Hohlkörper (15) ausgebildet ist.

5. Förderanlage nach einem der vorhergehenden Ansprüche, wobei die einlaufseitige Übergabeeinrichtung (3) eine pneumatische Vorrichtung (1) aufweist, **dadurch gekennzeichnet, dass** den bewegten Hohlkörpern (15) nachgeführte Mittel (14) vorgesehen sind, welche entlang einer im wesentlichen längs der Bewegungsbahn der Hohlkörper (15) verlaufenden Bahn bewegbar sind.

6. Förderanlage nach Anspruch 5, **dadurch gekennzeichnet, dass** federnde, elastische, nachgiebige oder nachführbare Mittel (14) vorgesehen sind, welche allenfalls vorhandene Höhenunterschiede zwischen den einzelnen Hohlkörpern (15) ausgleichen.

7. Förderanlage nach Anspruch 3 und 4, **dadurch gekennzeichnet, dass** die einlaufseitige Übergabeeinrichtung (3) zusätzlich einen Förderer (5) umfasst, welcher zwischen der pneumatischen Vorrichtung (1) und der Luftschleuse (4) angeordnet ist.

8. Förderanlage nach einem der vorhergehenden Ansprüche, wobei die auslaufseitige Übergabeeinrichtung (7) mit einer Luftschleuse (8) versehen ist, **dadurch gekennzeichnet, dass** letztere als Stauzone für die Hohlkörper (15b) ausgebildet ist, in der die im Hauptförderer (2) beabstandeten Hohlkörper (15a) zusammengeführt werden.

9. Förderanlage nach Anspruch 8, **dadurch gekennzeichnet, dass** der Boden (20) der Luftschleuse (8) als vertikale Abstützung und Führung der Hohlkörper (15b) ausgebildet ist.

10. Förderanlage nach Anspruch 8 oder 9, **dadurch gekennzeichnet, dass** die auslaufseitige Luftschleuse (8) eine Länge von mehreren Metern aufweist, so dass die Hohlkörper (15b) in Förderrichtung elastisch deformierbar sind, wodurch allfällige Förderdifferenzen zwischen dem Hauptförderer (2) und dem auslaufseitigen Anschlussförderer ausgleichbar sind.

11. Förderanlage nach Anspruch 10, **dadurch gekennzeichnet, dass** Mittel zum Messen einer allfälligen, quer zur Förderrichtung (F) bewirkten Deformation der Hohlkörper (15b) vorgesehen sind, und dass aufgrund der gemessenen Deformation die Geschwindigkeit des Haupt- und/oder des einlaufseitigen- und/oder des auslaufseitigen Anschlussförderers beeinflussbar ist.

## Claims

1. Conveying installation for conveying hollow bodies which are open at the end, in particular plastic bottles (15, 15a, 15b), having a main conveyor (2) for continuously conveying a series of spaced-apart hollow bodies (15a), and having transfer arrangements (3, 7) which are assigned to the inlet and outlet sides of the main conveyor (2) and are intended for the transfer from an inlet-side connection conveyor (6) to the main conveyor (2) and from the main conveyor (2) to an outlet-side connection conveyor (9), **characterized in that** the inlet-side transfer arrangement (3) has an air-lock (4) in which the hollow bodies (15) are aligned, by means of moving air, in order to be introduced into the following main conveyor (2), and/or **in that** the outlet-side transfer arrangement (7) has an air-lock (8) in which the hollow bodies (15b) are aligned, by means of moving air, in order to be introduced into the following conveyor (9).

2. Conveying installation according to Claim 1, **characterized in that** the inlet-side transfer arrangement (3) has a pneumatic apparatus (1) by means of which the hollow bodies (15) are subjected to positive pressure.

3. Conveying installation according to Claim 1, the inlet-side transfer arrangement (3) having an air-lock (4), **characterized in that** the latter is arranged immediately upstream of the main conveyor (2) and is provided with a plurality of horizontally and vertically spaced-apart air nozzles (12, 12a), via which the moving air passes out, counter to the conveying direction (F) of the hollow bodies (15), and can form a resistance against said hollow bodies.

4. Conveying installation according to Claim 3, **characterized in that** the base (13) or the air-lock (4) is designed as a vertical support and guide for the hollow bodies (15).

5. Conveying installation according to one of the preceding claims, the inlet-side transfer arrangement (3) having a pneumatic apparatus (1), **characterized in that** there are provided means (14) which are adjusted in accordance with the moving hollow bodies (15), it being possible for said means to be moved along a path which runs essentially along the movement path of the hollow bodies (15).

6. Conveying installation according to Claim 5, **characterized in that** resilient, elastic, compliant or adjustable means (14) are provided, said means compensating for any possible differences in height between the individual hollow bodies (15).

7. Conveying installation according to Claims 3 and 4, **characterized in that** the inlet-side transfer arrangement (3) additionally comprises a conveyor (5) which is arranged between the pneumatic apparatus (1) and the air-lock (4).

8. Conveying installation according to one of the preceding claims, the outlet-side transfer arrangement (7) being provided with an air-lock (8), **characterized in that** the latter is designed as an accumulation zone for the hollow bodies (15b), in which the hollow bodies (15a), spaced apart in the main conveyor (2), are brought together.

9. Conveying installation according to Claim 8, **characterized in that** the base (20) of the air-lock (8) is designed as a vertical support and guide for the hollow bodies (15b).

10. Conveying installation according to Claim 8 or 9, **characterized in that** the outlet-side air-lock (8) is several metres in length, with the result
that the hollow bodies (15b) can be elastically deformed in the conveying direction, as a result of which it is possible to compensate for any conveying differences between the main conveyor (2) and the outlet-side connection conveyor.

11. Conveying installation according to Claim 10, **characterized in that** there are provided means for measuring any deformation of the hollow bodies (15b) which is caused in the direction transverse to the conveying direction (F), and **in that**, on account of the deformation measured, it is possible to influence the speed of the main and/or of the inlet-side and/or of the outlet-side connection conveyor.

## Revendications

1. Installation de transport servant à transporter des corps creux ouverts d'un côté, notamment des bouteilles en matière plastique (15, 15a, 15b), comprenant un transporteur principal (2), servant au transport permanent d'une succession de corps creux (15a) mutuellement espacés, et des dispositifs de transfert (3, 7) associés du côté de l'entrée et du côté de la sortie au transporteur principal (2) et servant au transfert d'un transporteur de raccordement côté entrée (6) au transporteur principal (2) et du transporteur principal (2) à un transporteur de raccordement côté sortie (9), **caractérisée en ce que** le dispositif de transfert côté entrée (3) comprend un sas à air (4) dans lequel les corps creux (15) sont, au moyen d'air mis en mouvement, alignés pour leur introduction dans le transporteur principal (2) qui suit et/ou **en ce que** le dispositif de transfert côté sortie (7) comprend un sas d'air (8) dans lequel les corps creux (15b) sont, au moyen d'air mis en mouvement, alignés en vue de leur introduction dans le transporteur (9) qui suit.

2. Installation de transport suivant la revendication 1, **caractérisée en ce que** le dispositif de transfert côté entrée (3) comprend un dispositif pneumatique (1) au moyen duquel les corps creux (15) sont soumis à une dépression.

3. Installation de transport suivant la revendication 1, dans laquelle le dispositif de transfert côté entrée (3) comprend un sas d'air (4), **caractérisée en ce que** ce dernier est disposé directement en amont du transporteur principal (2) et est pourvu de multiples buses d'air (12, 12a) espacées horizontalement et verticalement au moyen desquelles l'air mis en mouvement peut sortir à l'encontre de la direction de transport (F) des corps creux (15) et opposer à ces derniers une résistance.

4. Installation de transport suivant la revendication 3, **caractérisée en ce que** le fond (13) du sas d'air (4) est agencé en tant que guide et appui vertical des corps creux (15).

5. Installation de transport suivant l'une des revendications précédentes, dans laquelle le dispositif de transfert côté entrée (3) comprend un dispositif pneumatique (1), **caractérisée en ce qu'**il est prévu des moyens (14), entraînés à la suite des corps creux (15), qui peuvent être déplacés le long d'une trajectoire s'étendant essentiellement le long de la trajectoire de déplacement des corps creux (15).

6. Installation de transport suivant la revendication 5, **caractérisée en ce qu'**il est prévu des moyens (14) se comportant comme un ressort, élastiques, pouvant céder ou pouvant être entraînés à la suite qui compensent des différences de hauteur se présentant en tout état de cause entre les différents corps creux (15).

7. Installation de transport suivant les revendications 3 et 4, **caractérisée en ce que** le dispositif de transfert côté entrée (3) comprend en outre un transporteur (5) qui est disposé entre le dispositif pneumatique (1) et le sas d'air (4).

8. Installation de transport suivant l'une des revendications précédentes, dans laquelle le dispositif de transfert côté sortie (7) est pourvu d'un sas d'air (8), **caractérisée en ce que** ce dernier est agencé de façon à constituer une zone d'accumulation, pour les corps creux (15b), dans laquelle les corps creux (15a) espacés dans le transporteur principal (2) sont rassemblés.

9. Installation de transport suivant la revendication 8, **caractérisée en ce que** le fond (20) du sas d'air (8) est agencé de façon à constituer un guide et appui vertical des corps creux (15b).

10. Installation de transport suivant la revendication 8 ou 9, **caractérisée en ce que** le sas d'air côté sortie (8) a une longueur de plusieurs mètres, d'une manière telle que les corps creux (15b) peuvent être déformés élastiquement suivant la direction de transport, de sorte que des différences de mouvement d'avance se présentant en tout état de cause entre le transporteur principal (2) et le transporteur de raccordement côté sortie peuvent être compensées.

11. Installation de transport suivant la revendication 10 **caractérisée en ce qu'**il est prévu des moyens servant à mesurer une déformation des corps creux (15b) réalisée en tout état de cause transversalement à la direction de transport (F) et **en ce que** la vitesse du transporteur principal et/ou du transporteur de raccordement côté entrée et/ou du transporteur de raccordement côté sortie peut être soumise à une influence en raison de la déformation mesurée.
